# DEMANDE DE BREVET EUROPEEN

(11) **EP 2 154 071 A1**
(43) Date de publication de la demande: **17.02.2010**
(21) Numéro de dépôt: 09165734.6
(22) Date de dépôt: 17.07.2009
(51) Int. Cl.: B64G 1/28, F16C 32/04, F16C 39/06, G01C 19/24

(54) **Dispositif d'actionneur gyroscopique à suspension magnétique**

(30) Priorité: 29.07.2008 FR 0804323
(71) Demandeur: Thales, 92200 Neuilly-sur-Seine (FR)
(72) Inventeur: Chassoulier, Damien, 06370, MOUANS-SARTOUX (FR)
(74) Mandataire: Esselin, Sophie

(57) **Abrégé**

La présente invention concerne une structure de suspension magnétique présentant un ou deux axes actifs, spécifiquement adaptées aux roues d'actionneurs gyroscopiques. Ce type de dispositif est destiné à être embarqué sur des satellites manoeuvrant.

L'actionneur gyroscopique selon l'invention a été conçu pour permettre la testabilité au sol, selon tout axe, de la roue qu'il comporte. Il présente un maximum de deux axes actifs et il est capable de reprendre de forts couples transverses.

L'actionneur gyroscopique selon l'invention présente la particularité de comporter une suspension magnétique obtenue par l'association d'une butée passive (respectivement active) (B1,B2,B3) et d'un centreur actif (respectivement passif) (AP,FL,ANP).

## Description

La présente invention concerne une structure de suspension magnétique présentant un ou deux axes actifs, spécifiquement adaptée aux roues d'actionneurs gyroscopiques. Ce type de dispositif est destiné à être embarqué sur des satellites manoeuvrant.

L'objectif de l'invention est de définir de nouvelles architectures de suspensions magnétiques permettant de faire léviter une roue à paliers magnétiques.

Actuellement, la recherche dans le domaine des actionneurs gyroscopiques à suspension magnétique vise tout d'abord à obtenir des roues testables selon tout axe, sous gravité, sans consommation d'énergie supplémentaire. Ensuite, pour des raisons de coûts et de complexité, on cherche à avoir un maximum de deux axes à contrôler de manière active. Enfin, étant appelée à être utilisé au sein d'actionneurs gyroscopiques, les roues doivent disposer de suspensions capables de reprendre de forts couples transverses.

Les solutions aujourd'hui envisagées sont le plus souvent fondées sur une problématique mécanique, les roues étant montées sur des roulements à billes. Les problèmes rencontrés sont classiquement des problèmes d'échauffement, de longévité, de micro-vibrations ...etc. Dans la présente demande de brevet, la roue considérée est à suspension magnétique ; le rotor est monté sur des paliers magnétiques. Elle repose sur l'utilisation d'aimants, de bobinages, d'armatures ferromagnétiques, les bobinages pouvant être excités par un courant d'excitation.

Par ailleurs, il n'existe pas, dans l'état de l'art, de suspension magnétique pour roue d'actionneur gyroscopique de conception simple, permettant de répondre aux contraintes explicitées ci-dessus.

Un but de l'invention est notamment de pallier cette absence de solution connue. Les objectifs et les choix assignés à l'actionneur gyroscopique selon l'invention impliquent que certaines caractéristiques doivent être respectées lors de la conception : ainsi, la roue présente une raideur, stable ou instable, sur chacun de ses trois axes, de façon à compenser le poids du rotor sans nécessiter d'apport d'énergie supplémentaire ; ensuite, le dispositif comprend soit une butée active, permettant de contrôler un axe, soit un centreur actif permettant de contrôler deux axes ; enfin, dans le but de pouvoir compenser de forts couples transverses, l'actionneur gyroscopique selon l'invention comporte une butée passive sur un grand diamètre ou un centreur passif réparti en au moins deux points éloignés le long de l'axe de rotation.

A cet effet, l'invention a pour objet un dispositif d'actionneur gyroscopique comportant une roue à suspension magnétique présentant un ou deux axes actifs, et montée sur un cardan, ladite roue présentant une raideur sur chacun de ses trois axes de translation, et comportant un corps appelé rotor mobile autour d'un axe de rotation par rapport à un corps de référence, **caractérisé en ce qu**'il comporte une butée et un centreur dont l'association permet d'assurer la fonction de suspension magnétique, et en ce que ladite roue présente une raideur selon chacun de ses axes de telle sorte qu'elle permet :
- de compenser le poids du rotor, et de rendre ladite roue testable selon tout axe sous gravité sans consommation d'énergie supplémentaire ;
- de transmettre un couple gyroscopique sans consommation d'énergie supplémentaire.

Dans un mode de réalisation préféré de l'invention, ladite butée est passive et présente une raideur radiale, c'est-à-dire selon un axe orthogonal à l'axe de rotation.

Avantageusement, ledit centreur présente une raideur radiale, c'est-à-dire selon un axe orthogonal à l'axe de rotation.

Dans un exemple de mise en oeuvre de l'invention, ledit centreur est un électro-aimant polarisé.

Dans un exemple de réalisation de l'invention, ledit centreur est sans raideur radiale, c'est-à-dire selon un axe orthogonal à l'axe de rotation.

Ledit centreur peut par exemple être un centreur à force de Laplace.

Ledit centreur peut également être un électro-aimant non polarisé.

D'autres caractéristiques et avantages de l'invention apparaîtront à l'aide de la description qui suit, faite en regard des dessins annexés qui représentent :
- la figure 1 : le schéma d'une demi-vue en coupe d'un premier exemple de suspension magnétique pour actionneur gyroscopique selon l'invention, comportant un centreur à électro-aimant polarisé ;
- la figure 2 : le schéma d'une demi-vue en coupe d'un deuxième exemple de suspension magnétique pour actionneur gyroscopique selon l'invention, comportant un centreur à force de Laplace ;
- la figure 3 : le schéma d'une demi-vue en coupe d'un troisième exemple de suspension magnétique pour actionneur gyroscopique selon l'invention, comportant un centreur à électro-aimant non polarisé.

Il est ici précisé que les exemples de mise en oeuvre de l'invention décrits à l'aide des figures ne sont pas exhaustifs et que l'on peut exploiter le principe de l'invention avec d'autres configurations de centreurs et de butées.

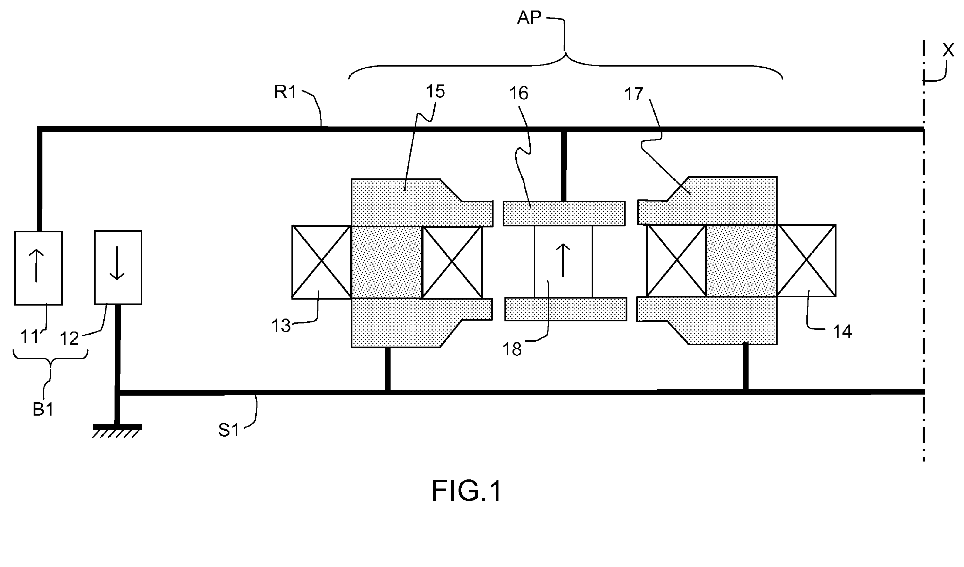

La figure 1 présente un schéma de suspension magnétique selon l'invention à travers une représentation simplifiée d'une demi-vue en coupe d'une roue d'actionneur gyroscopique. Il s'agit d'un premier exemple de mise en oeuvre du dispositif selon l'invention. Comme cela a été succinctement expliqué précédemment, le but de l'invention est de permettre la mise au point d'actionneurs gyroscopiques à suspension magnétique respectant trois critères principaux :
- ces actionneurs gyroscopiques doivent disposer d'une roue testable selon tout axe sous gravité, sans apport d'énergie supplémentaire ;
- ils doivent présenter un minimum d'axes actifs, soit un ou deux axes à contrôler ;
- la suspension magnétique du dispositif doit être capable de supporter des couples transverses très forts.

Dans la suite de la présente demande de brevet, on traitera plus particulièrement du cas où le dispositif comprend deux axes à contrôler. On parlera en conséquence de centreur actif de butée passive. Il est à noter que les explications à venir seront transposables au cas où le dispositif comprend un seul axe à contrôler : il suffit d'intervertir les termes « centreur » et « butée ».

Le respect des trois critères mentionnés ci-dessus implique des contraintes techniques dans la conception de l'actionneur gyroscopique à suspension magnétique selon l'invention :
- d'abord, la testabilité de la roue du dispositif selon tout axe, sous gravité, et sans consommation d'énergie supplémentaire, rend nécessaire la présence d'une raideur, stable ou instable, selon les trois axes de ladite roue, ces trois axes étant l'axe de rotation autour duquel tourne la roue et les deux axes orthogonaux à cet axe et contenus dans le plan de la roue. Cette raideur permet en effet de compenser le poids du rotor par l'intermédiaire d'un décalage de ce dernier ;
- ensuite, la capacité à reprendre de forts couples transverses nécessite la présence d'une butée passive à aimants (ou d'un centreur passif dans le cas d'un dispositif avec un seul axe à contrôler) sur un grand diamètre de la roue, ladite butée étant stable axialement et en basculement, et instable radialement ;
- enfin, le dispositif selon l'invention doit comporter un centreur actif (ou une butée active dans le cas d'un dispositif avec un seul axe à contrôler) pour compenser l'instabilité de la butée (ou celle du centreur).

Afin de répondre aux contraintes explicitées ci-dessus, l'objet de l'invention est un actionneur gyroscopique comportant une roue, avec un rotor R1 mobile autour d'un corps de référence, le stator S1. Le rotor R1 tourne autour de l'axe de rotation X. La suspension magnétique est constituée de l'association d'un centreur actif, ici un centreur à électro-aimant polarisé AP, et d'une butée passive B1 à aimants 11,12. Le centreur à électro-aimant polarisé AP est constitué de paliers magnétiques comportant des armatures ferromagnétiques 15,16,17, des bobinages 13,14 éventuellement redondés et des aimants polarisés 18. Le fonctionnement de ce centreur magnétique à électro-aimant polarisé AP est classique : les aimants polarisés 18 ainsi que les bobinages 13,14, pouvant être excités par un courant d'excitation, génèrent des flux magnétiques circulant dans les armatures ferromagnétiques 15,16,17 et dans les entrefers qui les séparent ; ces flux magnétiques induisent des forces de rappel ou de répulsion au niveau des entrefers et permettent de contrôler de manière active les deux axes orthogonaux à l'axe X et contenus dans le plan des paliers magnétiques.

Cette première variante constitue un exemple de réalisation de suspension magnétique pour roue d'actionneur gyroscopique selon l'invention.

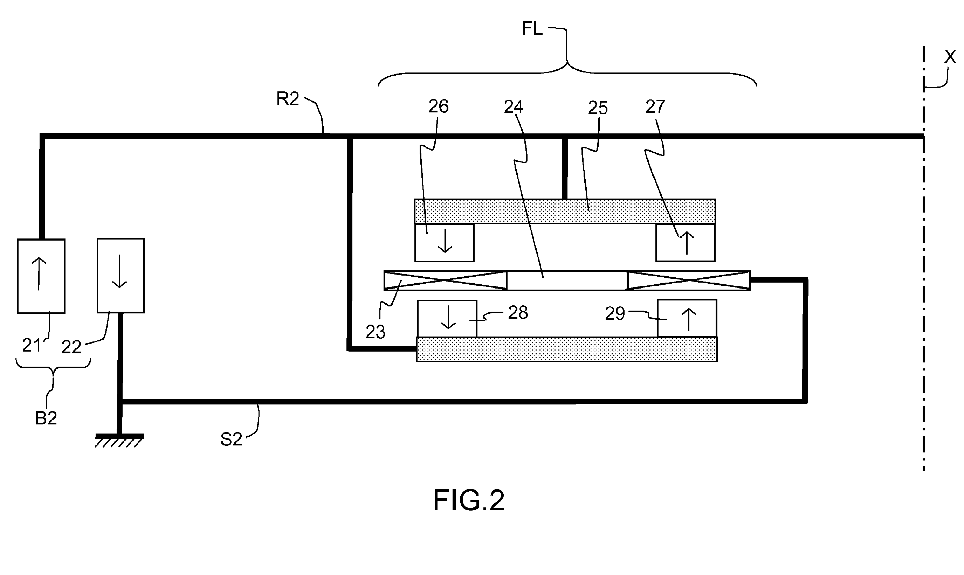

La figure 2 illustre un deuxième exemple de mise en oeuvre de l'invention. Dans cette exemple, le centreur actif associé à la butée passive B2 à aimants 21,22 est un centreur à force de Laplace FL.

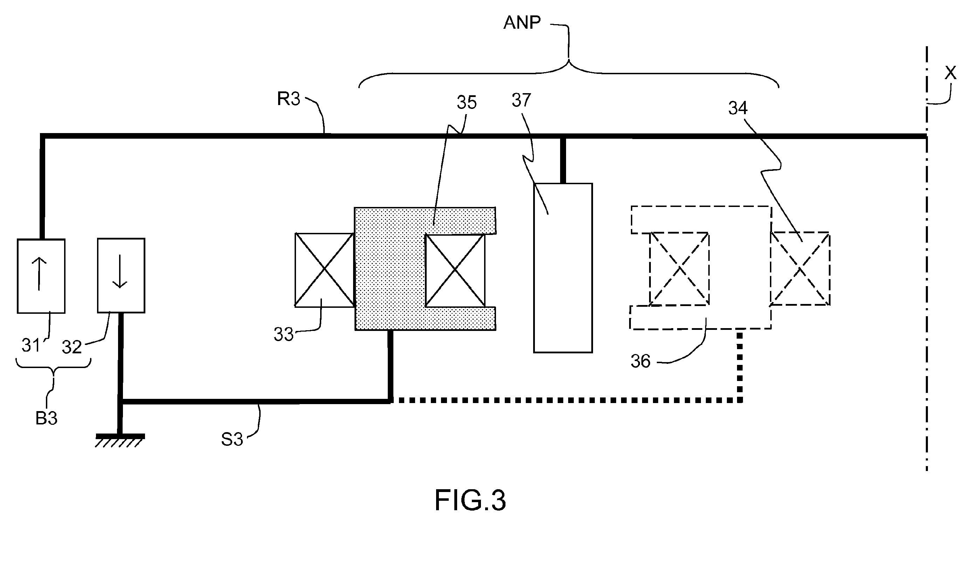

La figure 3 représente un troisième et dernier exemple de mise en oeuvre de l'invention, dans lequel le centreur actif associé à la butée passive B3 à aimants 31,32 est un centreur à électro-aimant non polarisé ANP.

Le centreur à force de Laplace FL de la figure 2 comme le centreur à électro-aimant non polarisé ANP de la figure 3 présentent tous deux la particularité de ne pas comporter de raideur radiale, c'est-à-dire selon un axe orthogonal à l'axe X et contenu dans le plan médian du centreur, ledit plan médian étant lui-même orthogonal à l'axe X. Ce point constitue un avantage par rapport au centreur à électro-aimant polarisé AP de la figure 1. En effet, ce dernier présente une raideur radiale instable qui vient s'ajouter à celle de la butée B1. A cette raideur globale est associée une fréquence de résonnance impactant directement le dimensionnement de la bande passante du dispositif. Cette fréquence doit donc être la plus basse possible, afin d'être facilement contrôlable. De plus, cette fréquence de résonnance liée à l'instabilité radiale du dispositif doit en effet être découplée de la fréquence de rotation du rotor R1, ce qui peut avoir des conséquences négatives sur les performances du dispositif. Les centreurs à force de Laplace FL et à électro-aimant non polarisé ANP ne présentant pas de raideur radiale, ce problème ne se pose pas car la raideur radiale globale est fortement diminuée.

Ainsi, la figure 2 présente un centreur à force de Laplace FL comportant des armatures ferromagnétiques 24,25, un bobinage 23 éventuellement redondé et des aimants polarisés 26,27,28,29. Le rotor R2 peut tourner par rapport au stator S2 autour de l'axe de rotation X et le centreur à force de Laplace FL contrôle les deux axes orthogonaux à l'axe X.

Quant à la figure 3, elle représente un centreur à électro-aimant non polarisé ANP associé à une butée passive B3 à aimants 31,32. Le centreur à électro-aimant non polarisé ANP comprend un bobinage 33 éventuellement redondé, des armatures ferromagnétiques 35 et des aimants non polarisés 37, ledit centreur pouvant être doublé à l'intérieur des électroaimants non polarisés 37 par d'autres bobinages 34 associés à des armatures ferromagnétiques 36. Comme les autres dispositifs, celui-ci comporte un rotor R3 pouvant tourner par rapport au stator S3 autour de l'axe de rotation X. Le centreur à électro-aimant non polarisé ANP peut contrôler les deux axes orthogonaux à l'axe X.

Il est ici rappelé que les trois exemples explicités ne constituent pas une énumération exhaustive des possibilités. De nombreuses variantes concernant les paliers magnétiques du centreur actif ou concernant le type de butée passive existent, sans que cela ne sorte du champ de la présente invention. Ainsi, la butée à aimants peut comporter de 1 à n paires d'aimants, lesdits aimants pouvant être à aimantation axiale ou radiale.

De plus, les entrefers de la butée peuvent être plats ou cylindriques.

Concernant le centreur magnétique à aimant polarisé AP de la figure 1, celui-ci peut comporter des bobinages à l'intérieur et/ou à l'extérieur par rapport aux aimants polarisés ; les bobinages peuvent être agencés sur deux étages, comme dans la demande de brevet français FR 0707992 ; ou encore, les aimants polarisés peuvent se situer au stator, et non au rotor.

Enfin, le centreur à aimant non polarisé de la figure 3 peut comporter des bobinages à l'intérieur et/ou à l'extérieur par rapport aux aimants non polarisés ; les bobinages peuvent être agencés verticalement et non horizontalement ; enfin, comme précédemment, les bobinages peuvent être agencés sur deux étages.

En résumé, l'invention a pour principal avantage de proposer une architecture simple d'actionneur gyroscopique à suspension magnétique. Ladite suspension magnétique est assurée par l'association d'un centreur actif et d'une butée passive (ou réciproquement d'un centreur passif et d'une butée active). L'actionneur gyroscopique selon l'invention a en outre été conçu pour permettre la testabilité au sol, selon tout axe, de la roue qu'il comporte. En effet, le dispositif d'actionneur gyroscopique selon l'invention consomme la même énergie à chaque instant, quel que soit le couple gyroscopique appliqué.

Par ailleurs, il présente un maximum de deux axes actifs et il est capable de reprendre de forts couples transverses.

## Revendications

1. Dispositif d'actionneur gyroscopique comportant une roue à suspension magnétique présentant un ou deux axes actifs, et montée sur un cardan, ladite roue présentant une raideur sur chacun de ses trois axes de translation, et comportant un corps appelé rotor (R1,R2,R3) mobile autour d'un axe de rotation (X) par rapport à un corps de référence (S1,S2,S3), **caractérisé en ce qu'**il comporte une butée (B1,B2,B3) et un centreur (AP, FL, ANP) dont l'association permet d'assurer la fonction de suspension magnétique, et **en ce que** ladite roue présente une raideur selon chacun de ses axes de telle sorte qu'elle permet :
• de compenser le poids du rotor (R1,R2,R3), et de rendre ladite roue testable selon tout axe sous gravité sans consommation d'énergie supplémentaire ;
• de transmettre un couple gyroscopique sans consommation d'énergie supplémentaire.

2. Dispositif selon la revendication 1, **caractérisé en ce que** ladite butée (B1,B2,B3) est passive et présente une raideur radiale, c'est-à-dire selon un axe orthogonal à l'axe de rotation (X).

3. Dispositif selon l'une des revendications 1 à 2, **caractérisé en ce que** ledit centreur (AP) présente une raideur radiale, c'est-à-dire selon un axe orthogonal à l'axe de rotation (X).

4. Dispositif selon la revendication 3, **caractérisé en ce que** ledit centreur est un électro-aimant polarisé (AP).

5. Dispositif selon l'une des revendications 1 à 2, **caractérisé en ce que** ledit centreur (FL,ANP) est sans raideur radiale, c'est-à-dire selon un axe orthogonal à l'axe de rotation (X).

6. Dispositif selon la revendication 5, **caractérisé en ce que** ledit centreur est un centreur à force de Laplace (FL).

7. Dispositif selon la revendication 5, **caractérisé en ce que** ledit centreur est un électro-aimant non polarisé (ANP).
